(19) Europäisches Patentamt
European Patent Office
Office européen des brevets

(11) Publication number: **0 216 158**
**A2**

(12) # EUROPEAN PATENT APPLICATION

(21) Application number: **86111644.0**

(51) Int. Cl.[4]: **G06F 15/70**, G06K 9/36

(22) Date of filing: **22.08.86**

(30) Priority: **12.09.85 US 775460**

(43) Date of publication of application: **01.04.87 Bulletin 87/14**

(84) Designated Contracting States: **DE FR GB**

(71) Applicant: **International Business Machines Corporation**
**Old Orchard Road**
**Armonk, N.Y. 10504(US)**

(72) Inventor: **Flickner, Myron Dale**
**6362 San Anselmo Way**
**San Jose California 95119(US)**
Inventor: **Mohiuddin, Kottappuram Mohammed Ali**
**5018 Gazania Drive**
**San Jose California 95111(US)**

(74) Representative: **Grant, Iain Murray**
**IBM United Kingdom Limited Intellectual Property Department Hursley Park**
**Winchester Hampshire SO21 2JN(GB)**

(54) **Apparatus for analysing the connectivity of pixels in a raster scanned image frame.**

(57) A method and means for analysing and labelling picture elements (pixels) in a raster-scanned image includes utilising a fixed pixel labelling priority rule that takes into account near-neighbour frame border pixels that are not included in the currently-viewed portion of the image by substituting the inverse of the value of the current image pixel being labelled in place of undefined border pixels outside the viewed image portion.

EP 0 216 158 A2

Xerox Copy Centre

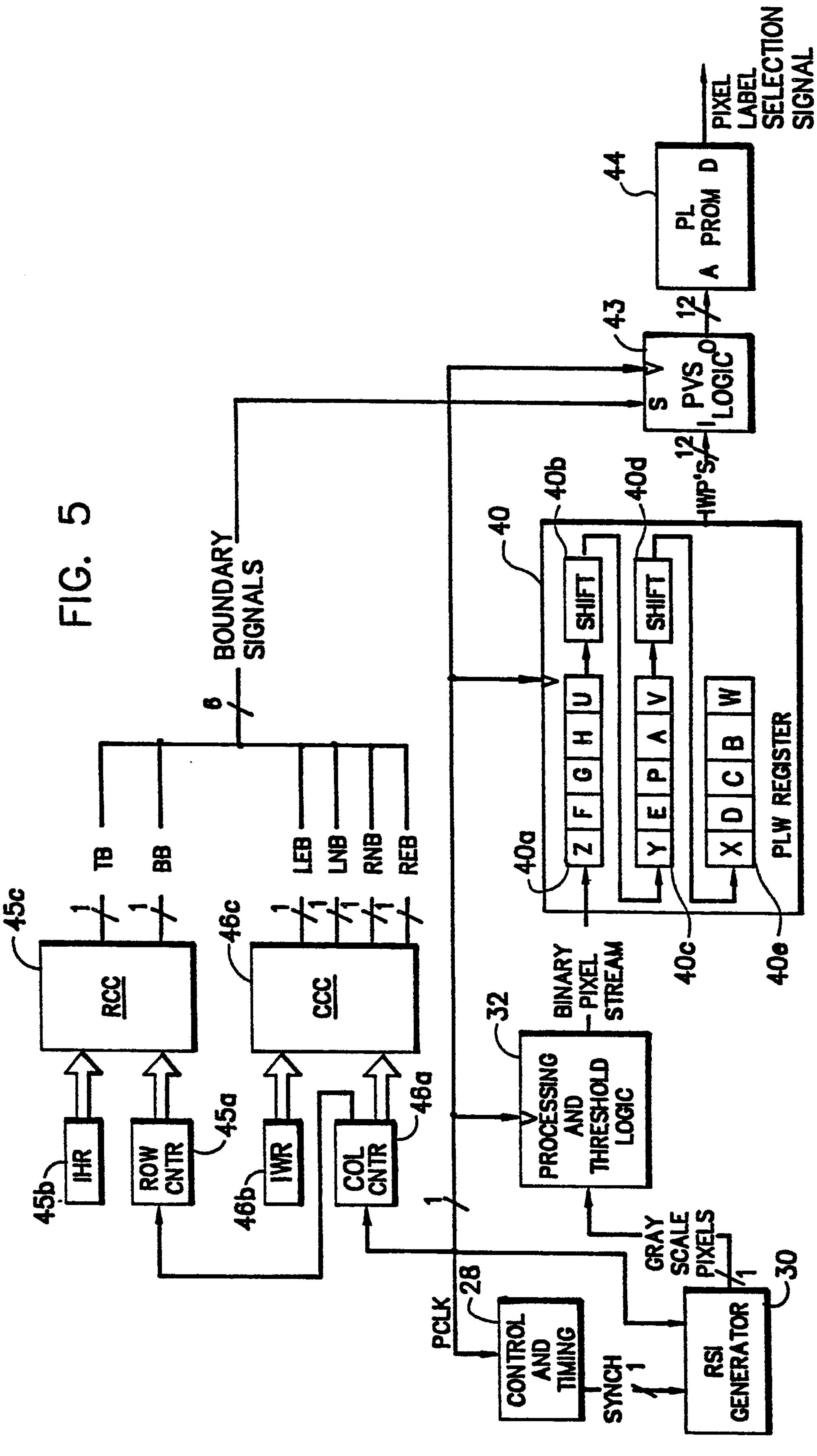
BOUNDARY SIGNALS
6
RCC
CCC
45c
46c
TB
BB
LEB
LNB
RNB
REB
IHR
ROW CNTR
IWR
COL CNTR
45b
45a
46b
46a
PCLK
28
CONTROL AND TIMING
SYNCH
RSI GENERATOR
30
GRAY SCALE PIXELS
32
PROCESSING AND THRESHOLD LOGIC
BINARY PIXEL STREAM
40
40a
40b
40c
40d
40e
SHIFT
Z F G H U
Y E P A V
X D C B W
PLW REGISTER
IWP'S
12
43
S
PVS LOGIC
I
O
44
PL PROM
A
D
PIXEL LABEL SELECTION SIGNAL

FIG. 5

# APPARATUS FOR ANALYSING THE CONNECTIVITY OF PIXELS IN A RASTER SCANNED IMAGE FRAME

The invention relates to the analysis of individual picture elements (pixels) of a raster-scanned image frame.

Automated recognition of objects in raster-scanned images is aided by the technique of connectivity analysis in which the pixels forming a particular object in the scanned image are assigned the same label. An operation for labelling image object pixels was originally set forth by Rosenfeld and Pfaltz in "Sequential Operations and Digital Picture Processing," Journal of ACM, Vol. 14, No. 4, October 1966, pp 471-494. US Patent No 4,183,013 to Agrawala et al exemplifies a pixel labelling scheme.

With respect to pixel labelling, the pixels forming a given object are said to be connected, and the Rosenfeld reference teaches that the labelling of image pixels involves the two steps of analysing the connectivity of pixels in the image and labelling of pixels in analysed image regions.

Pixel connectivity analysis is typically handled by the examination of a neighbourhood of pixels surrounding a pixel to be labelled, with the currently-analysed pixel assigned the value of one of the neighbourhood pixels according to a predetermined priority scheme. Using the prioritised neighbourhood, the pixels of a raster-scanned image can be analysed and labelled in the sequence in which they are generated.

Typically, the viewed portion of a raster-scanned image consists of a window that is framed over a larger pixel matrix, so that the viewed portion is surrounded by "undefined pixels" not actually belonging to the viewed image. These undefined pixels are not labelled. However, when the currently-analysed pixel is adjacent the edge of the viewed portion, the neighbourhood employed for its analysis and labelling includes undefined pixels lying outside the framed image window.

When analysing and labelling pixels on the edge of the viewed portion of a scanned image, previous label selection priority schemes are forced to maintain a set of specialised priority rules, each employed at a respective one of the boundaries of the viewed image. This makes the labelling process difficult, with the challenge being to find an efficient, simplified way of accommodating image boundary conditions so that the undefined pixels do not lead to ambiguous results in component labelling or to complex labelling algorithms.

The ambiguity arises in connectivity labelling - schemes from the fact that undefined pixels contain no image information that validly relates them to the pixels forming the currently-viewed portion of an image. Assignment of an arbitrary value to undefined pixels can result in the assignment of an incorrect label to an image boundary pixel if the image boundary pixel's label is selected on the basis of an undefined pixel to which the connectivity scheme determines the image pixel is connected.

Many labelling schemes (such as the Agrawala one referenced previously) employ complex software constructs for pixel analysis and labelling; these are relatively slow-acting and inappropriate for use in high-speed sequential processing such as is implemented in pipelined systems.

Accordingly, the object of the present invention is to provide for the unambiguous labelling of image boundary pixels during connected pixel labelling of the image.

The present invention provides, in the analysis of frames of raster-scanned images, a method and an apparatus for analysing the connectivity of pixels in a raster scanned image frame in a sequential manner utilising a fixed labelling priority rule.

The method includes analysis of the connectivity of each pixel in an image frame by sequential examination of the colour match of each pixel with respect to its adjacent neighbours within a predetermined neighbourhood. Each analysed pixel is labelled such that the same label is assigned to each pixel within a maximally connected group of pixels within the image frame, with any given pixel being labelled according to a fixed priority rule in the event that at least two causal neighbours within the neighbourhood have the same colour match. At the image frame boundary neighbourhoods including undefined neighbour pixels, the inverse of the value assigned the pixel being labelled is substituted in the places of the undefined neighbour pixels.

The apparatus includes a pixel labelling window register for defining a fixed size pixel window for each pixel in a sequence of pixels forming a raster-scanned image. A pixel labelling circuit responds to the values of pixels in each window by labelling each pixel such that the same label is assigned to each pixel within a maximally connected group of pixels within an image frame, any given pixel being labelled by the pixel labelling circuit according to a fixed priority rule in the event that at least two causal neighbours in the given pixel's window have the same colour match. The apparatus further includes pixel value substitution logic for, when a window defined by the pixel labelling circuit contains undefined pixels, substituting, in the places of the undefined pixels, the inverse of the value assigned the pixel being labelled.

The present invention enables component labelling to be speedily and efficiently done on a sequential basis, making it particularly suited for high speed pipelined hardware implementation.

The invention is further described in the following description in conjunction with the accompanying drawings in which:

Figure 1 is an illustration of a raster-scanned image containing three image objects and four frames.

Figure 2 is a magnified view of a portion of a raster-scanned image frame illustrating the matrix arrangement of pixels in the image.

Figure 3 is an illustration of a component labelling window used in analysing and labelling the sequence of pixels forming a raster-scanned image.

Figures 4A and 4B are drawings illustrating three separate boundary conditions which can occur and labelling of pixels.

Figure 5 is a block diagram of a pixel labelling system.

Figure 6 is a partial block diagram of pixel value substitution logic for interconnecting a set of image window registers and a pixel labelling circuit.

Figures 7A and 7B are illustrations of, respectively, correct and incorrect labelling of image object pixels.

In the black/white raster-scanned image of Figure 1, identification of objects 10, 12, and 14 can be accomplished at a low level of image abstraction by providing the pixels connected to form a respective object with identical labels to differentiate them from pixels forming another, different object.

In this regard, pixels (picture elements) are the elemental image regions that are presented for viewing in an ordered N $\times$ M matrix format which is represented by the matrix fragment of Figure 2. The matrix of pixels if formed by scanning a scene in a vertically ordered sequence of horizontal sweeps forming a raster, and quantising the scene information at regular intervals in each sweep to provide a succession of pixels. A sweep is conventionally referred to as a scanline and an image is reconstructed from a swept scene by presenting the scanlines in the sequence with which they were generated. The separation of each scanline into a sequence of pixels and the presentation of each scanline adjacent the scanline following it naturally imposes the matrix format of Figure 2. The matrix structure (conventionally called a raster-scanned format) has N rows (each corresponding to a respective scanline), each made up of a sequence of M pixels. The matrix thus includes M columns of vertically adjacent pixels and is referred to as an "N $\times$ M matrix." In the discussion following, whenever a pixel or image matrix is referred to, it is to be considered an N $\times$ M, raster-scanned matrix of pixels.

Referring to Figure 1, the objective of an image analysis application is to analyse and identify the pixels of an image according to the respective image objects that they form. To facilitate the identification, each pixel is assigned one of a pair of binary values by comparing it against a preset level. If a pixel meets or exceeds the level it is assigned a colour value of 1, indicating that it is connected to other, as yet unidentified pixels, to form an image object. Pixels that fall below the preset level are assigned to make up the image background or holes in objects. Since these pixels do not form part of an image object they are assigned the second binary value 0.

In Figure 1 all of the pixels forming the background upon which the image objects 10, 12, and 14 are presented are assigned the label $H_0$ by the labelling application process, with the H indicating their pixel value (0) and the subscript indicating their inclusion in the background. The pixels forming the image object 10 are assigned the label $I_2$ to distinguish them from the image pixels of the object 10 that have the same binary value. In these cases, the I portion of the label indicates the original assignment of a 1 to such pixels.

The labelling of pixels associated with the image object 12 (a circular ring) must also include labelling the pixels in the hole of the middle of the ring to distinguish them from the background pixels $H_0$. The hole pixels in the image object 14 are therefore assigned the label $H_2$.

The resolution requirements of many image analysis applications are such that the entire image cannot be encompassed in one field of view. What is often done in such cases is to scan the image in frames, analyse the frames separately, and then combine the results from the different frames to form a composite description of the image. For example, in Figure 1 the oval-shaped ring (image object 14) has portions in each of four abutting image frames 16, 18, 20, and 22. Although the pixels for the four portions of the object 14 will be initially labelled separately, it is to be understood that the application process analysing the image of Figure 1 will have means to piece together the differently-labelled object portions into an integrated image object. Proper merging of the portions of the object 14 requires unambiguous labelling of the pixels in each of its sections. In particular, the present labelling scheme ensures that the hole pixels of the object 14 are assigned H labels distinguishable from the H label assigned backgrounds pixels of the image of Figure 1.

Refer to Figure 3 now for an understanding of how connected pixels in an image are labelled by neighbourhood analysis. Firstly current pixel being analysed and labelled is denoted by P. A 3 $\times$ 5 window of pixels surrounding the current pixel P being examined and labelled is then used to analyse its connectivity to adjacent pixels.

The 3 $\times$ 5 pixel labelling window used in pixel labelling has a first component of 8 pixels A-H that immediately surround the current pixel P in a basic 3 $\times$ 3 pixel square that is framed on each end by a 3 $\times$ 1 pixel stack. The 3 $\times$ 5 window is used to establish the connectivity relation between the current pixel P and the image pixels that have already been labelled. In the following portion of the discussion, the pixels in the pixel labelling window are referred to as the "neighbours" of P.

In the labelling scheme, if P has the same value as one of its connected neighbours in the pixel window, then P will be assigned the label of this neighbour. Since there may exist more than one connected neighbour, a priority sequence is followed for selecting the label to be assigned P. The preferred priority sequence is: label (A) > label (B) > label (C) > label (D) > label (V) > label (X).

In connectivity analysis, A, B, C, D, V, and W are referred to as P's causal neighbours. Giving the general left-to-right and top-to-bottom path of raster image scanning, a relational history of these causal neighbours can be accumulated by the labelling application to provide a reliable basis for making a decision concerning their connectivity to P.

Refer now to Figure 4A for consideration of a pixel labelling window (PLW) adjacent the left edge of an image frame. Initially, it is to be understood that the frame defining an image to be viewed does not necessarily include all of the pixels in the image, and that undefined pixels lie adjacent the perimeter of the image frame, yet do not belong to the image. Thus, when P is adjacent the edge of the frame, the priority selection scheme will not work accurately. For example, when, as in Figure 4A, P (defined by the intersection of $column_i$ and $row_j$) is at the left perimeter of an image frame, the first two columns of the PLW will contain "undefined pixels" (indicated by "*"), while the remaining three columns will all have pixels defined with respect to the image frame being analysed - (indicated by "•"). Therefore, the PLW in Figure 4A falls on the left extreme boundary (LEB). If the PLW is relocated by one pixel to the right in Figure 4A, then the neighbours U, V, and W will still be undefined; this location is referred to as the left near boundary (LNB). It should be noted that corresponding boundary conditions exist on the right-hand edge of the raster-scanned image; these are referred to as right extreme boundary (REB) and right near boundary (RNB).

In Figure 4B, P lies at the intersection of the first row of the raster matrix, $row_1$, and $column_h$. Therefore, the top row of the PLW contains undefined pixels and is said to lie in the top boundary (TB). A corresponding bottom boundary (BB) of undefined pixels borders the bottom edge of the raster matrix.

In view of the described boundaries, and, assuming that the image frame matrix is larger than or equal to the component labelling window, 15 distinct boundary conditions must be accounted for when analysing and labelling P. These conditions are given in Table I.

TABLE I

| BOUNDARY CONDITION | BOUNDARY CONDITION DEFINING SIGNALS |
|---|---|
| 1 | $LEB \cdot \overline{TB} \cdot \overline{BB}$ |
| 2 | $LEB \cdot \overline{TB} \cdot BB$ |
| 3 | $LEB \cdot TB \cdot \overline{BB}$ |
| 4 | $LNB \cdot \overline{TB} \cdot \overline{BB}$ |
| 5 | $LNB \cdot \overline{TB} \cdot BB$ |
| 6 | $LNB \cdot TB \cdot \overline{BB}$ |
| 7 | $REB \cdot \overline{TB} \cdot \overline{BB}$ |
| 8 | $REB \cdot \overline{TB} \cdot BB$ |
| 9 | $REB \cdot TB \cdot \overline{BB}$ |
| 10 | $RNB \cdot \overline{TB} \cdot \overline{BB}$ |
| 11 | $RNB \cdot \overline{TB} \cdot BB$ |
| 12 | $RNB \cdot TB \cdot \overline{BB}$ |
| 13 | $TB \cdot \overline{LEB} \cdot \overline{LNB} \cdot \overline{REG} \cdot \overline{RNB}$ |
| 14 | $BB \cdot \overline{LEB} \cdot \overline{LNB} \cdot \overline{REB} \cdot \overline{RNB}$ |
| 15 | $\overline{TB} \cdot \overline{BB} \cdot \overline{LEB} \cdot \overline{LNB} \cdot \overline{REB} \cdot \overline{RNB}$ |

For example, condition 1 defines the condition where P is adjacent the left extreme boundary and in neither the top left-hand nor the bottom left-hand corner of the raster matrix. Condition 5 corresponds to P being located in the bottom row - ($row_n$) and second column ($col_2$) of the matrix. Condition 13 obtains whenever the PLW is located such that P is in $row_1$ of the raster matrix and the PLW is not adjacent either the left or right extreme or near boundaries. Under condition 15, no pixels in the PLW are undefined.

Returning again to the example of Figure 4A, for each of the boundary conditions 1-14, the inverse of the value of P is assigned arbitrarily to the undefined pixels in the PLW. This will remove the undefined pixels from inclusion in the above-described pixel labelling scheme, and remove any possibility of ambiguity in the labelling of pixels positioned adjacent the periphery of a raster-scanned image frame.

An apparatus for performing the above-described method can be understood with reference to Figure 5. In Figure 5 a conventional video control and timing circuit 28 produces a SYNCH signal to synchronise raster scanning and a pixel clock - (PCLK) having the frequency of pixel occurrence in a row of a raster-scanned image. A raster-scanned image (RSI) generator 30 conventionally produces an image signal consisting of a stream of quantised, grey-scale image pixels in a standard raster-scanned format, with a new image pixel produced with each cycle of PCLK. Conventional pixel processing and threshold logic 32 compares each pixel in the input pixel stream against a predetermined level to derive the binary characteristic for the pixel. The output of the pixel measurement logic 32 is provided as a stream of binary pixels, each having only an image (1) or hole (0) value.

The pixel stream produced by the pixel measurement logic 32 is fed to a set of pixel labelling window (PLW) registers 40 which frame the PLW for each pixel of the raster-scanned image that is to be labelled. The registers are conventional, serially-connected shift registers which shift the pixels of an N $\times$ M image frame pixel matrix serially at the frequency of PCLK. The image window registers 40 include a first register 40a having a 1 $\times$ 5 pixel capacity. The 5-pixel register 40a is connected to a shift register 40b having the capacity to store and serially shift M-5 pixels. These registers 40a and 40b together have the capacity for storing 1 row of M pixels. the register 40b shifts pixels into another 1 $\times$ 5 pixel register 40c. The register 40c is connected to shift pixels into a register 40d, equivalent in all respects to the register 40b. Finally, the register 40d shifts pixels to a third 1 $\times$ 5 pixel shift register 40e.

As pixels are shifted serially through the PLW registers 40, the pixels held in locations F, G, and H of register 40a, the pixels in positions V, A, P, and E of register 40c, and the pixels in positions B, C, D, and X of register 40e are provided, once each cycle of PCLK, on the twelve output lines labelled IWP's (corresponding to image window pixels).

The IWP's are fed to a pixel value substitution logic (PVS logic) circuit 43 which detects the current boundary condition and which, if necessary, also substitutes the inverted value of P for the pixels that are undefined under the current boundary condition.

In response to boundary condition 15 of Table I, the PVS logic circuit 43 forwards all of the IWP's obtained from the PLW registers 40 to a pixel labelling (PL) PROM 46. Under each of conditions 1-14, the PVS logic circuit 43 forwards the values of defined pixels together with the inverse value of P in place of the undefined pixels.

The PL PROM 44 implements the labelling - scheme described above, using the 12 forwarded pixels to address a storage location indicating which of the labels is to be assigned to P.

The operations of the PVS logic circuit 43 and the PL PROM 44 are synchronised through provision of PCLK.

The current boundary condition obtaining for a raster-scanned image is provided by a top/bottom boundary (TBB) detection circuit embracing components 45a, 45b, and 45c, and a right/left boundary detection circuit including components 46a, 46b, and 46c. The top/bottom boundary detection circuit includes a row counter 45a that identifies the number of the current row being scanned by counting up in response to the column counter described below. The current row count from the row counter 45a that identifies the number of the current row being scanned by counting up in response to the column counter described below. The current row count from the row counter 45a is compared against a value contained in a presettable image height register (IHR) 45b, the comparison being done by a row count comparator (RCC) 45c. The RCC operates as follows: when the row counter 45a begins counting from 0, the comparator 45c provides the top boundary (TB) signal. The row count is incremented each time the column counter reaches a count of M. Then, when the row counter and IHR values are equal, the comparator 45c provides the bottom boundary (BB) signal. In the preferred embodiment, the IHR 45b is set to N, so that BB is activated when the row count reaches N. The row counter 45a is reset upon reaching N and begins counting again from 0. In this regard, a signal to reset the row counter can be provided from the RCC 45c.

Raster matrix columns are counted by a column counter 45a that is reset at the beginning of each scanline and incremented thereafter by PCLK. The current count of the counter 46a is compared against the width in pixels of the raster-scanned image as represented by a value in an image width register (IWR) 46b. A column count comparator (CCC) 46c compares the output of the counter 46a against the image width available from the register 46b. In keeping with the defined matrix structure, the IHR 46b is set to M and the column counter 46b counts PCLK cycles from 0 to M. The column counter 46b is reset when it reaches M; each time the column counter is reset, the row counter is incremented.

The comparator 46c compares the preset count in the register 46b with the current column count in the counter 46a and at the appropriate time provides the signals LEB, LNB, RNB, or REB.

It should be evident that the boundary signals TB, BB, LEB, LNB, RNB, and REB are all synchronised by PCLK to the shifting of pixels through the PLW registers 40. The boundary signals indicate the presence in the PLW registers of undefined pixels from previous pixel rows in the same frame or the immediately preceding or succeeding frame. Thus, when TB and LEB are activated, indicating boundary condition 1, undefined pixels, corresponding to the pixels forming the bottom row of the preceding iteration of the current frame, will occupy the PLW registers 40 from position A in register 40c through position W in register 40e. The values for M defined pixels (corresponding to the first row of the present scanned iteration of the current frame) will be contained in the PLW registers from storage position P backward through position H in register 40a. As another example, RNB will indicate when the first two pixels of $row_{i+2}$ have been shifted into locations F and Z in register 40a.

$Row_{i+1}$ pixels will be held from location G in register 40a through E in register 40c; $row_i$ pixels from P in register 40c through D in register 40e; and row $_{i-1}$ pixels from C through W in register 40e. In this example, the RNB boundary signal will cause the PVS logic circuit 43 to substitute the inverted value of P for the pixel values stored at positions Z, F, Y, E, D, and X of the PLW registers 40. The valid and substituted pixel values are provided, in the proper order, by the PVS logic circuit 43 to the address - (A) port of the PL PROM 44.

A pixel label selection signal corresponding to the label selected according to the above-described algorithm is stored at the location addressed by the original and substituted values forwarded by the PVS logic circuit 43 to the PL PROM 44. It should be evident that, with the inverted value of P substituted for the invalid pixels, the invalid pixels will not affect the selection of a label for P.

The interconnection of the PVS logic circuit 43 between the PLW registers 40 and the PL PROM 44 is illustrated in greater detail in Figure 6. In the preferred embodiment, the inventors have embodied the functions of the PVS logic circuit 43 in a programmable logic array (PLA) that receives as inputs the six boundary signals and the twelve IWP values from the PLW registers 40a, 40c, and 40e. The boundary signals are provided through a select (S) port of the logic circuit 43; the IWP values from the PLW registers are provided through an input - (I) port; and the PCLK signal is fed through a clock port.

Programmable array logic is well understood in the art. A programmable logic device such as the PVS logic circuit 43 is capable of being programmed to perform functions in response to a varying set of input conditions. In the invention, the PVS logic circuit 43 is programmed to execute in response to the boundary signals by operating on the IWP's in a manner corresponding to the pseudo-Pascal code presented in Table II.

TABLE II

PIXEL VALUE SUBSTITUTION PROCEDURE

/* Initially assume condition 15 exists (no boundary signals active) and make the following direct assignments*/

$A_{out} := A_{in};$
$B_{out} := B_{in};$
$C_{out} := C_{in};$
$E_{out} := D_{in};$
$F_{out} := E_{in};$
$G_{out} := F_{in};$
$H_{out} := H_{in};$
$V_{out} := V_{in};$
$X_{out} := X_{in};$
$Y_{out} := Y_{in};$
$P_{out} := P_{in};$

/*Now, as boundary signals are activated, substitute appropriate pixels in the following way*/

```
If LEB then
begin

     Vout: = -P;
     Bout: = -P;
     Aout: = -P;
     Hout: = -P
end
else if LNB then
     Vout: = -P;

if RNB then
begin
     Xout: = -P;
     Yout: = -P
end
else if REB then
begin
     Xout: = -P;
     Yout: = -P;
     Dout: = -P;
     Eout: = -P;
     Fout: = -P
end;
if TB then
begin
     Bout: = -P;
     Cout: = -P;
     Dout: = -P;
     Xout: = -P
end;
if BB then
begin
     Hout: = -P;
     Gout: = -P;
     Fout: = -P
end.
```

In Table II, the PVS logic 43 initially assumes that condition 15 exists, that is that P is not adjacent any of the image boundaries; in this case, the PVS logic circuit 43 will simply assign to the output pixels ($A_{out}$ -$P_{out}$ ) the pixel values for the corresponding IWP's provided by the PLW registers 40 ($A_{in}$ -$P_{in}$).

Next, as the boundary signals provided by the comparators 45c and 46c are activated, that is as pixels adjacent the above-defined boundaries of the raster-scanned image are labelled, the undefined pixels in the PLW are neutralised by substitution of the inverted P value for the values of corresponding invalid pixels. In this regard, when P is on the left extreme boundary, LEB is activated and the portion of the pseudo-code listing headed "If LEB then" causes -P, the inverted value of P, to be substituted into the window neighbours overlaying undefined pixels. In the left extreme boundary case, these neighbours are A, B, H, and V.

The procedure of Table II also provides for label selection of corner pixels by permitting assignment of the inverted P value in the event that a vertical and a horizontal boundary signal are concurrently activated.

Alternative approaches to altering the labelling algorithm embedded in the PL PROM 44 are possible in light of the above teachings. For example, it would be possible to encode the six BOUNDARY SIGNALS into a 4-bit boundary condition signal and feed the boundary condition signal directly to the PL PROM 44. This, however, would require increasing the size of the PROM by a factor of 16.

Another, erroneous approach, deceptively attractive in its simplicity, would be to pad the image frame with undefined pixels having a predetermined value, for example 0 or 1. Such padding would be made possible by altering the Table II procedure to assign the predetermined value to the undefined pixels indicated by a respective BOUNDARY SIGNAL.

Such padding would effectively surround the border of the raster-scanned image with an enclosure of identically-valued undefined pixels. However, as illustrated in Figure 7A and 7B this could lead to incorrect labelling of valid image pixels. In Figure 7A a labelled image consisting of an object and four holes is illustrated. Proper labelling will assign the connected pixels of the object the pixel label I1, while the pixels of each of the holes would bear labels signifying that the holes are different. If the undefined pixels surrounding the Figure 7A image were arbitrarily assigned the value 0, and the component labelling algorithm described above were followed, the result would be to label all the holes identically as illustrated in Figure 7B.

It is therefore manifest that enhanced image inspection applications are enabled by applying the present invention. The enhancement results from responding dynamically to the changing border of a raster-scanned image and acting to suppress the potentially ambiguous effect of undefined boundary pixels in the labelling of image pixels adjacent the border. It should be evident that the proper labelling of boundary pixels achieved by the invention enables the analysis of images that are larger than an available viewing frame. The solution to the boundary value problem provided by the invention limits the size of memory required to support a component labelling system by minimising the size of the pixel labelling PROM 44.

Finally, in the apparatus according to the invention, the required operations can be performed rapidly and automatically. The boundary condition is defined and a pixel is analysed and labelled within the one cycle of the pixel clock during which the pixel is held at the P location of the PLW register.

It should be understood that the invention may be practiced otherwise than as specifically described and that modifications are consequently possible in the light of the teaching of the invention.

## Claims

1. A method for analysing the connectivity of pixels in a raster-scanned image frame in a sequential manner utilising a predetermined fixed priority rule, comprising the steps of:

analysing the connectivity of each component in the image by assessing the colour match of each component with respect to its causal neighbours within a fixed-size window;

labelling each analysed component such that the same label is assigned to each component within a maximally connected group of components within the frame, any given component being labelled according to the fixed priority rule in the event that at least two causal neighbours have the same colour match; and in frame boundary fixed-size windows having undefined neighbour components, substituting the inverse colour value of the component being labelled in the places of said undefined neighbour components.

2. The method of Claim 1 wherein said components are pixels occurring in a raster-scanned sequence synchronised by a pixel clock signal having a predetermined pixel frequency and said steps are performed for each of said pixels within the cycle of said pixel clock signal during which the pixel occurs.

3. An apparatus for analysing the connectivity of pixels in a raster-scanned image frame in a sequential manner utilising a predetermined priority rule, comprising:

window register means responsive to a sequence of colour-valued pixels that form a raster-scanned image frame for associating each pixel in said sequence to causal pixel neighbours by a fixed-size window containing the pixel and its causal neighbours;

labelling means responsive to each fixed-size window for analysing the connectivity of each pixel to other pixels in the sequence based upon the colour value match of the pixel with respect to its causal neighbours and for labelling each pixel such that the same label is assigned to each pixel within a maximally connected group of pixels within the image frame, with any given pixel being labelled according to the fixed priority rule in the event that at least two of its causal neighbours have the same colour value; and

value substitution means connected between said window means and said labelling means and responsive to fixed size windows adjacent the boundaries of said image frame for substituting the inverted colour value of a pixel being labelled in the places of its undefined pixel neighbours.

4. The apparatus of Claim 3 wherein said labelling means includes an addressable storage device having pixel label selection signals stored at locations addressed by colour values of pixels in said fixed-size windows.

5. The apparatus of Claim 4 wherein said fixed-size window pixel colour values include said inverted values substituted in the places of undefined pixels contained in said fixed-size windows adjacent the boundaries of said image frame.

6. The apparatus of Claim 3 wherein said value substitution means includes programmable logic circuitry.

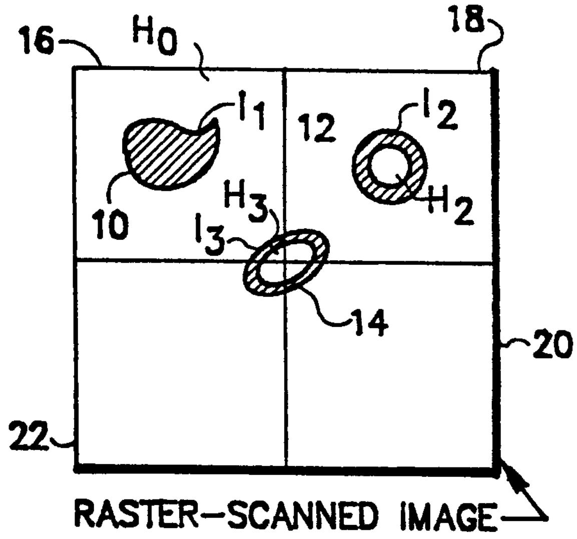


FIG. 1

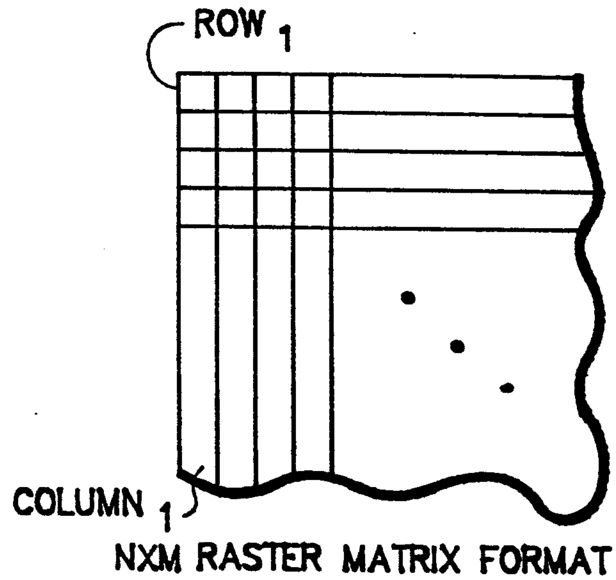


FIG. 2

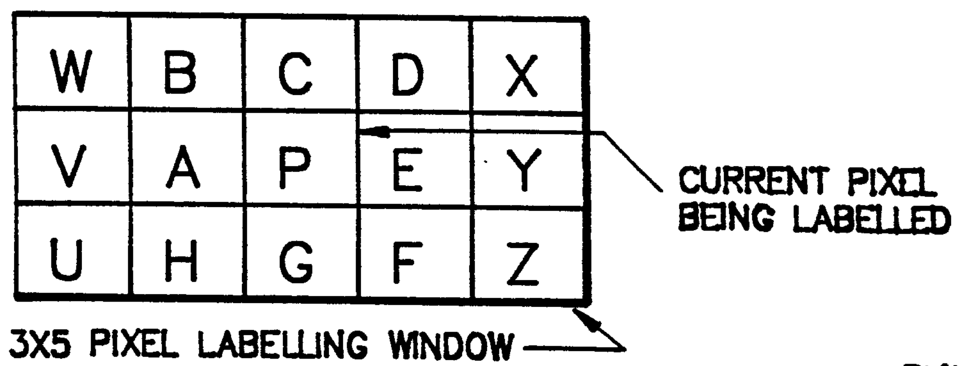


FIG. 3

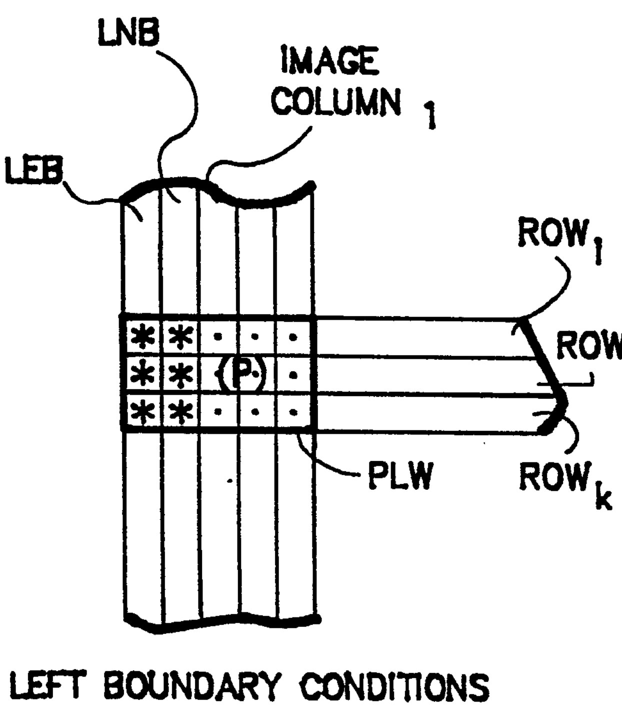


FIG. 4A

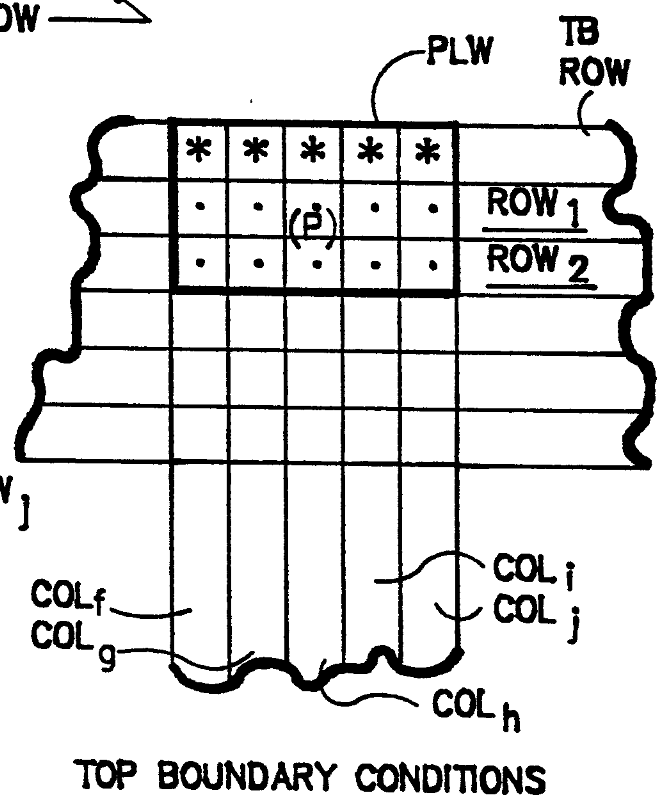


FIG. 4B

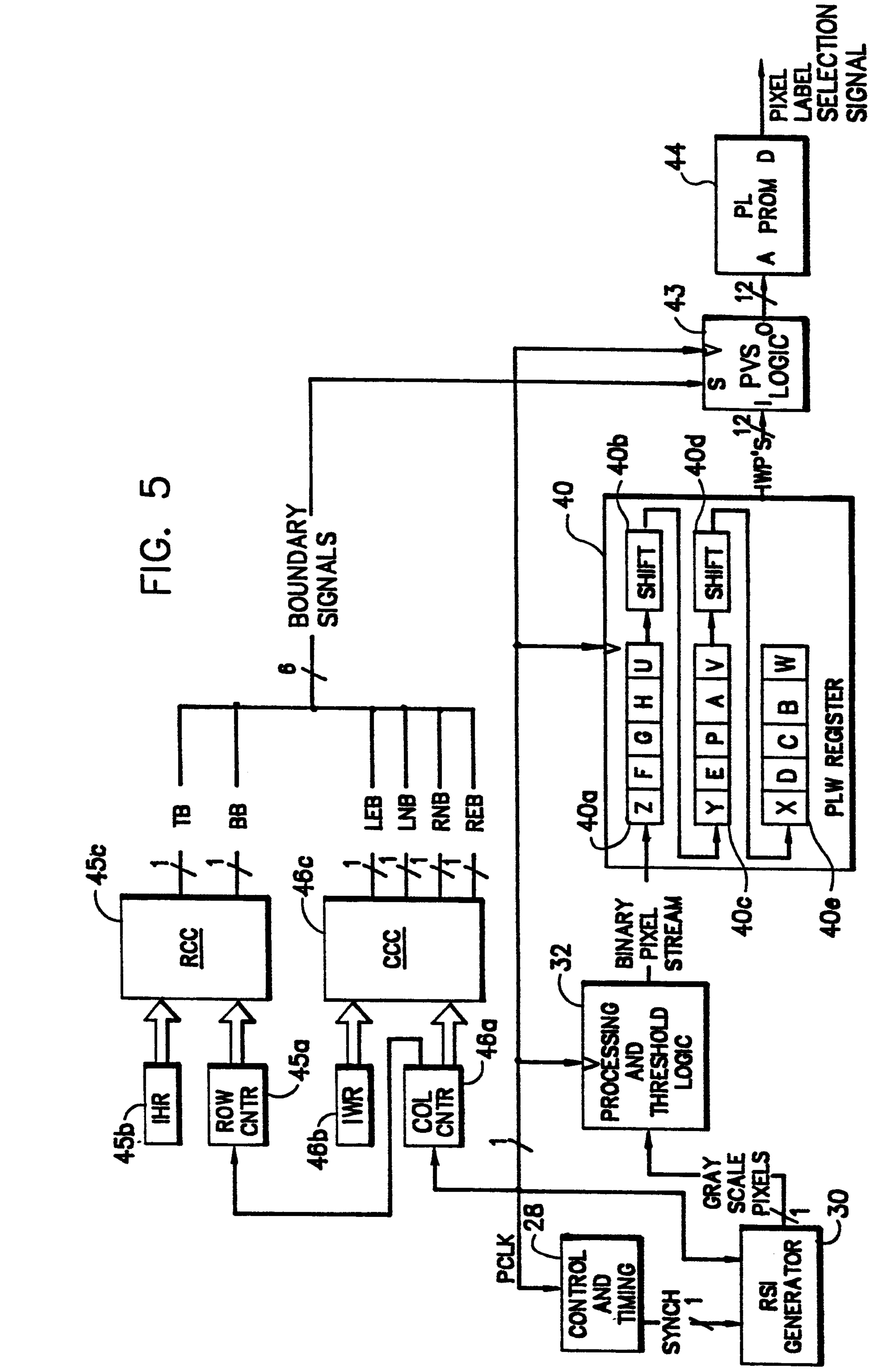
RCC
CCC
IHR
ROW CNTR
IWR
COL CNTR
45b
45a
45c
46b
46a
46c
TB
BB
LEB
LNB
RNB
REB
1
6
BOUNDARY SIGNALS
PCLK
28
CONTROL AND TIMING
SYNCH
RSI GENERATOR
30
GRAY SCALE PIXELS
32
PROCESSING AND THRESHOLD LOGIC
BINARY PIXEL STREAM
40
40a
40b
40c
40d
40e
Z F G H U
Y E P A V
X D C B W
SHIFT
PLW REGISTER
IWP'S
12
43
S V
PVS LOGIC
I O
44
PL PROM
A D
PIXEL LABEL SELECTION SIGNAL

FIG. 5

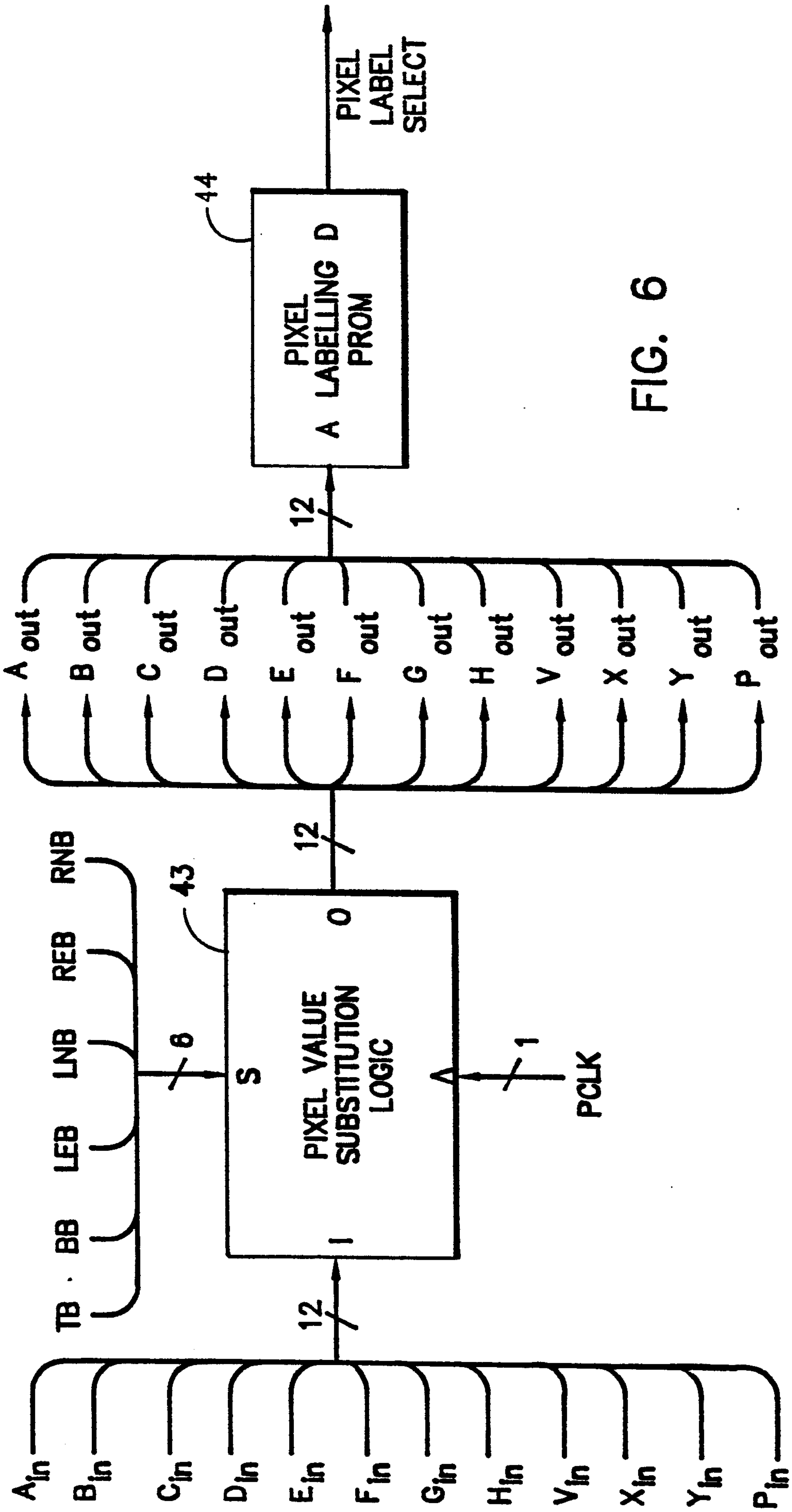

PIXEL LABEL SELECT
44
PIXEL LABELLING PROM
A
D
12
A out
B out
C out
D out
E out
F out
G out
H out
V out
X out
Y out
P out
12
43
PIXEL VALUE SUBSTITUTION LOGIC
S
O
I
TB
BB
LEB
LNB
REB
RNB
8
1
PCLK
12
$A_{In}$
$B_{In}$
$C_{In}$
$D_{In}$
$E_{In}$
$F_{In}$
$G_{In}$
$H_{In}$
$V_{In}$
$X_{In}$
$Y_{In}$
$P_{In}$


FIG. 6

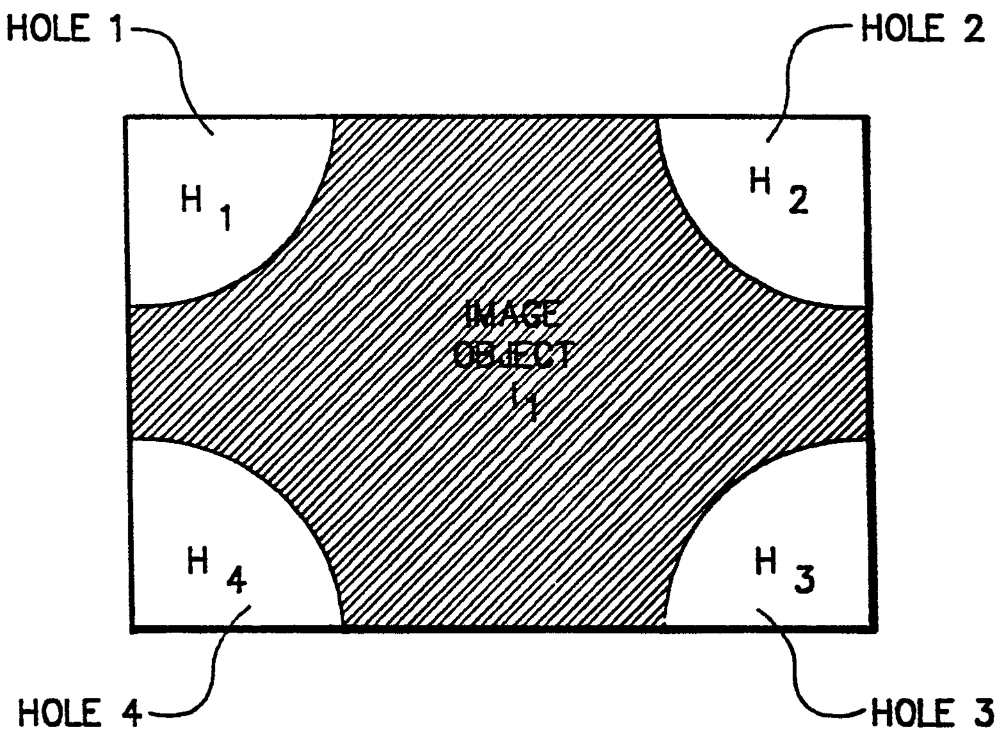
HOLE 1
HOLE 2
H 1
H 2
IMAGE
OBJECT
I 1
H 4
H 3
HOLE 4
HOLE 3

FIG. 7A

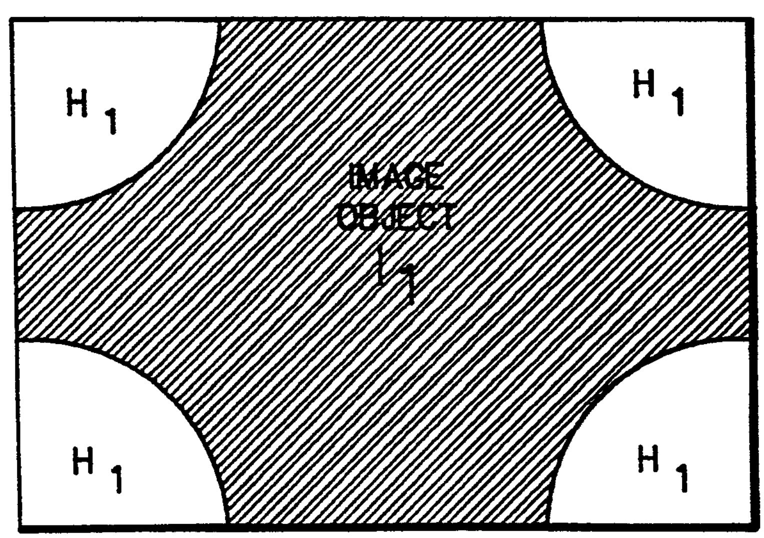
H 1
H 1
IMAGE
OBJECT
I 1
H 1
H 1

FIG. 7B